# EUROPEAN PATENT SPECIFICATION

(11) **EP 3 088 219 B1**
(45) Date of publication and mention of the grant of the patent: **16.03.2022**
(21) Application number: 16166272.1
(22) Date of filing: 20.04.2016
(51) Int. Cl.: B60C 23/04, B60C 11/24, G01C 22/00, G07C 5/00, G07C 5/08

(54) **TIRE SENSOR-BASED MILEAGE TRACKING SYSTEM AND METHOD**
REIFENSENSORBASIERTES LAUFLEISTUNGSVERFOLGUNGSSYSTEM UND VERFAHREN
SYSTÈME DE SUIVI DE KILOMÉTRAGE PAR CAPTEUR DE PNEU ET PROCÉDÉ

(30) Priority: 29.04.2015 US 201514698939
(43) Date of publication of application: 02.11.2016
(73) Proprietor: The Goodyear Tire & Rubber Company, Akron, Ohio 44316 (US)
(72) Inventor: SINGH, Kanwar Bharat, Stow, OH 44224 (US); PATEL, Amrita, Greenville, NC North Carolina 27858 (US); SUH, Peter Jung-min, Copley, OH Ohio 44321 (US)
(74) Representative: Kutsch, Bernd

(56) References cited:
- EP-A1- 2 813 378
- US-A- 6 087 930
- US-A1- 2004 073 339
- US-A1- 2007 210 905
- US-A1- 2007 241 871
- US-A1- 2009 145 216

## Description

### Field of the Invention

The invention relates generally to tire monitoring systems for collecting measured tire parameter data during vehicle operation and, more particularly, to systems utilizing tire sensor-sourced data in determining experiential service mileage on the tire.

### Background of the Invention

Tires age generally sold having a manufacturer-specified mileage rating. Such tires are represented as being functional for the mileage for which they are rated. However, users may fail to monitor the mileage on a tire in order to assess how much of the rated mileage for the tire remains. This is true particularly when the tires on a vehicle are of different age, having been placed into service at different times. The tires may further have experienced rotation on the vehicle during regular maintenance, causing the owner to lose track of the mileage on each tire. Consequently, the user of the vehicle may resort to speculation as to the mileage on each vehicle when deciding when to replace the tire.

There remains, accordingly, a need for a reliable, durable, and robust system and method for tracking the mileage on a tire for the purpose of indicating when the rated mileage for the tire has been reached.

US-A-2004/0073339 describes a system for monitoring a tire comprising a device for detecting data from the tire comprising a code identifying the tire and data relating to the state of the tire and a central processing unit able to cause automatic processing of the information and to generate a value of an index characteristic of the tire during use. A control unit may be installed in the vehicle and may communicate with tire mounted sensors and with devices detecting the number of kilometers travelled. These devices are located inside the tire sensors and are preferably activated by the movement of the tire. The kilometers travelled are obtained from the number of revolutions performed by the tire. The data regarding the number of kilometers is stored on rewritable memory locations.

EP-A-2 813 378 describes a tire wear state estimation system and method having a tire mounted sensor sending data to the vehicle.

US-A-6,087,930 describes an active integrated circuit transponder and sensor apparatus for transmitting vehicle tire parameter data.

US-A-2007/0210905 describes a system and a method for satellite aided truck/trailer tracking and monitoring.

US-A-2009/0145216 discloses a tire parameter sensor unit with real time data storage to provide a permanent log of the operational history of a tire. The sensor unit is integrated in the tire.

### Summary of the Invention

The invention relates to a system in accordance with claim 1 and to a method in accordance with claim 8.

Dependent claims refer to preferred embodiments of the invention.

In a preferred aspect of the invention, a tire tracking system and method for tracking travel mileage experienced by a vehicle tire includes a tire-affixed identification transponder operative to generate tire-specific identification data, a vehicle-based incremental vehicle travel distance estimator for generating a synchronous stream of incremental vehicle travel distance estimations and a timestamp synchronization and distance traveled estimator operative to generate a continuous synchronous stream of incremental tire travel distance estimations from the incremental vehicle travel distance estimations. A mobile network uploads the incremental tire travel distance estimations and the tire-specific identification data to a remote server that generates an aggregate of the tire travel distance estimations in a form accessible by the tire-specific identification data.

In another preferred aspect of the invention, a tire-mounted temperature sensor and a tire-mounted pressure sensor are mounted to the vehicle tire to operatively generate respectively tire-specific historical temperature data and tire-specific historical pressure data. The mobile network uploads the historical temperature data and the historical pressure data with the incremental tire travel distance estimations and the tire-specific identification data to the remote server.

Pursuant to another preferred aspect of the invention, the vehicle-based incremental vehicle travel distance estimator includes a vehicle-mounted sensor providing by vehicle CAN-Bus an incremental vehicle travel distance estimation and/or a global-positioning system providing an incremental vehicle travel distance estimation

### Definitions

"ANN" or "Artificial Neural Network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.

### Brief Description of the Drawings

The invention will be described by way of example and with reference to the accompanying drawings in which:
FIG. 1 is schematic of the subject system and method in which vehicle distance travelled information is taken off the CAN-Bus.
FIG. 2 is a schematic of the system and method in which the vehicle distance travelled information is taken off GPS.

### Detailed Description of Example Embodiments of the Invention

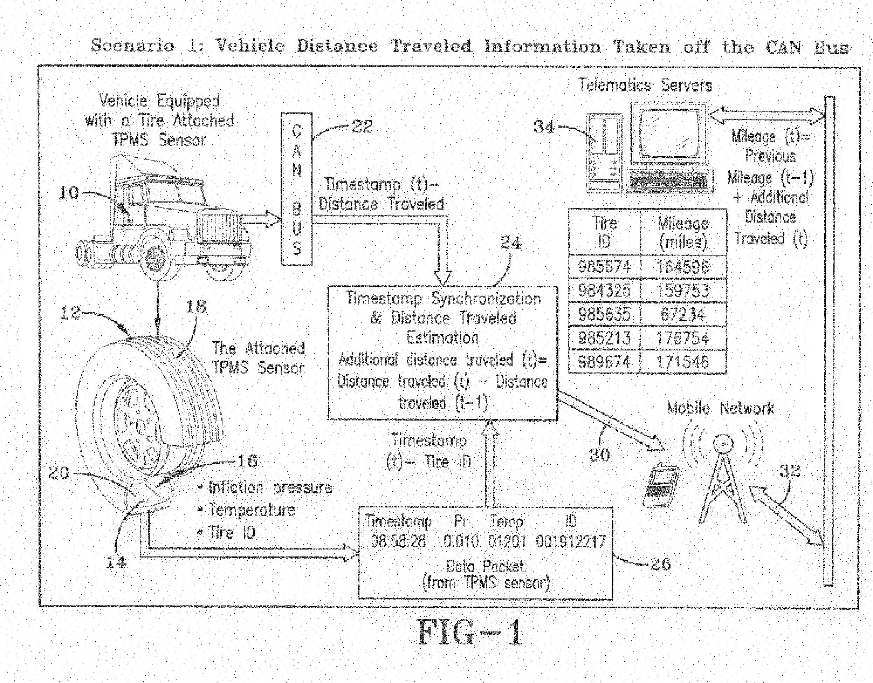

Referring to FIG. 1, a first embodiment of the tire tracking system and method is shown. A vehicle 10 is equipped with pneumatic tires 12. While vehicle 10 is seen as a commercial truck, other vehicle types are compatible with the use of the subject method and system. The tires 12 have respective dates of service implementation that may or may not coincide. Each tire 12 may accordingly have been placed into service at a different respective time. It is an objective of the subject system and method to monitor and track each tire 12 individually in order to record important historical information regarding each tire. Such information may include aggregate service mileage experienced by the tire, historical pressure data of the tire and/or historical temperature data of the tire. The information gathered and recorded may prove useful to monitor tire history and assist in determining when the tire needs replacement.

The tires 12 are of conventional pneumatic construction having a tread 18 and an air cavity 16. An inner liner 20 defines the cavity 16. A tire monitoring device 14 is affixed to the tire inner liner 20, hereinafter referred to as a "TPMS" sensor. The device 14 includes tire identification information by which each individual tire may be identified. The device 14 may further include a temperature sensor for monitoring the temperature of the tire and a tire pressure sensor for monitoring the air pressure within cavity 16. One or more transmitters are further included within the device 14 for wirelessly transmitting tire identification data, temperature data and pressure data. Collectively, the tire ID, temperature data and pressure data of the tire is referred herein as the "Data Packet" from the TPMS device 14.

The device 14 attaches to the tire inner liner 20 by suitable means such as an adhesive. The Data Packet from the TPMS device 14 is time stamped at time (t) as seen at block 26, wherein the pressure temperature and tire ID are recorded at a specific time (t). The time stamped Data Packet is input into a Timestamp Synchronization and Distance Traveled Estimation 24. The vehicle 10, in the first embodiment of the system shown in FIG. 1, is equipped with one or more sensors measuring vehicle distance travelled and providing via CAN-Bus 22 the measured vehicle distance travelled at Timestamp (t). The vehicle distance travelled at Timestamp (t) is input into the Timestamp Synchronization and Distance Travelled Estimation 24.The Timestamp Synchronization and Distance Travelled Estimation 24 takes the vehicle distance travelled at (t) since the last distance travelled at (t-1) and uploads the distance to a Mobile Network 32. The Distance Travelled Estimation is then uploaded via the Mobile Network 32 to a Telematic Server 34 with the Data Packet for the tire. The Telematic Server 34 maintains a record of mileage (t) = previous for the tire, continuously updated by mileage (t-1 + additional distance traveled (t). As seen in FIG. 1, recorded mileage for each tire is maintained and accessible by means of the Tire ID received telemetrically from the vehicle 10. The service mileage for each tire, along with historical pressure and temperature data from the Data Packet for the tire is accordingly accessible to assist fleet operators in assessing the history of each tire on a vehicle.

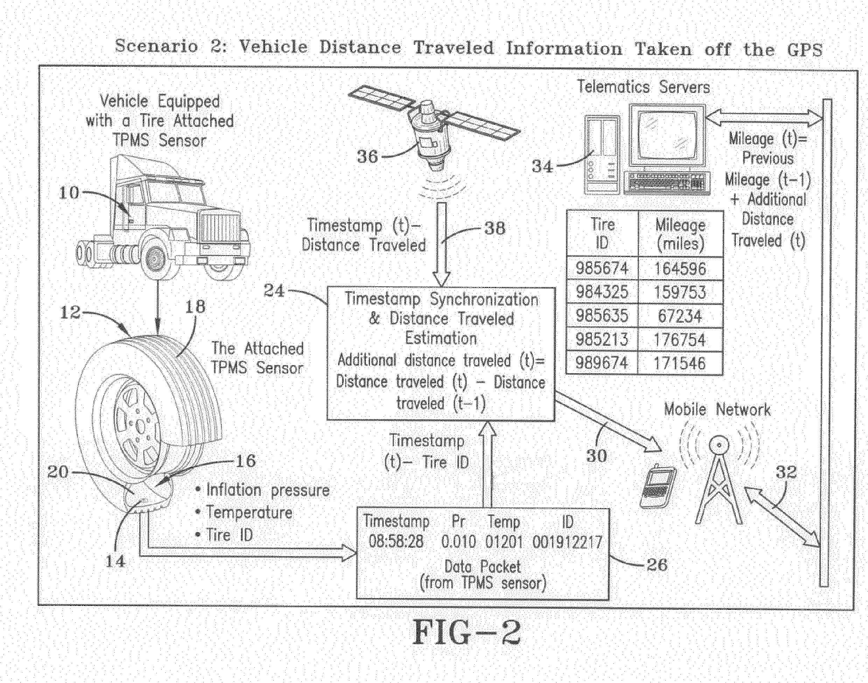

The alternative embodiment of the tire tracking system and method described above is seen in FIG. 2. In FIG. 2, the distance travelled by the vehicle is obtained through use of a GPS system 36. The Timestamp (t) - Distance Traveled input 38 obtained from the GPS system 36 inputs into the Timestamp Synchronization and Distance Traveled Estimation 24. As with the first embodiment of FIG. 1, the Data Packet from the TPMS system with the additional distance travelled is sent at 30 to the Telematic Server 34 by means of a Mobile Network 32.

GPS based estimates of vehicle speed may not be as reliable (e.g. issues with GPS signal drop off etc.) Accordingly, vehicle speed information on the CAN Bus may be preferable. CAN Bus information is based off wheel speed signals and the tire rolling radius (Vehicle speed = rolling radius x omega; where omega is the average of the 4 wheel speeds).

From the foregoing, it will be appreciated that the subject tire tracking system and method tracks travel mileage experienced by a vehicle tire and may further track historical information such as tire temperature and pressure history. The system includes a tire-affixed identification transponder, TPMS device 14. The Mobile Network 32 is operative to telemetrically transmit tire-specific identification data in a Data Packet to the remote Telematic Server 34. A Timestamp Synchronization and Distance Traveled Estimator 24 estimates additional distance travelled by the tire from either sensor-derived or GPS-derived vehicle distance travelled data. The remote server 34 stores the tire distance-travelled estimation in user accessible form, identified by a unique tire ID assigned to the tire.

## Claims

1. A tire tracking system for tracking travel mileage experienced by a vehicle tire (12), the system comprising:
a vehicle (10) supported by at least one vehicle tire (12);
a tire-affixed identification transponder operative to generate time stamped tire-specific identification data;
a vehicle-based system operative to generate a synchronous stream of incremental vehicle travel distance estimations;
a timestamp synchronization and distance traveled estimator (24) operative to estimate a synchronous, preferably continuous stream of tire additional travel distance estimations based on the stream of incremental vehicle travel distance estimations and the time stamped tire-specific identification data;
a mobile network (32) for uploading the tire additional travel distance estimations and the tire-specific identification data to a remote server;
wherein the remote server operatively aggregates a total tire travel distance from the uploaded tire additional travel distance estimations in a form accessible by the tire-specific identification data.

2. The tire tracking system of claim 1, wherein the vehicle-based system operative to measure incremental vehicle travel distance comprises at least one vehicle-mounted sensor providing by a vehicle CAN-bus (22) an incremental vehicle travel distance estimation.

3. The tire tracking system of claim 1 or 2, wherein the vehicle-based system operative to measure incremental vehicle travel distance comprises a global positioning system (36) providing an incremental vehicle travel distance estimation.

4. The tire tracking system of claim 1, 2 or 3, further comprising a tire-mounted pressure sensor (14) operatively generating historical tire-specific inflation pressure data and wherein the mobile network (32) is operative to upload the historical tire-specific inflation pressure data to the remote server with the tire additional travel distance estimation and the tire-specific identification data.

5. The tire tracking system of at least one of the previous claims, further comprising a tire-mounted temperature sensor operatively generating tire-specific historical temperature data and wherein the mobile network (32) is operative to upload the historical tire-specific temperature data to the remote server with the tire additional travel distance estimation and the tire-specific identification data.

6. The tire tracking system of at least one of the previous claims, wherein the vehicle-based system is a vehicle-based incremental vehicle travel distance estimator.

7. The tire tracking system of at least one of the previous claims, comprising a tire-mounted temperature sensor operatively generating tire-specific historical temperature data; and a tire-mounted pressure sensor operatively generating historical tire-specific inflation pressure data; and wherein the mobile network uploads the historical temperature data and the historical pressure data with the incremental tire travel distance estimations to the remote server.

8. A method for tracking historical tire information, the method comprising:
affixing an identification transponder to a vehicle tire (12) operative to generate time stamped tire-specific identification data;
generating from a vehicle-based incremental vehicle travel distance estimator a synchronous stream of incremental vehicle travel distance estimations;
generating from a timestamp synchronization and distance traveled estimator (24) a continuous synchronous stream of tire additional travel distance estimations based on the incremental vehicle travel distance estimations and the time stamped tire-specific identification data;
uploading through a mobile network (32) the tire additional travel distance estimations and the tire-specific identification data to a remote server;
generating from the remote server an aggregate of the tire additional travel distance estimations in a form accessible by the tire-specific identification data.

9. The method of claim 8, further comprising:
mounting a temperature sensor to the vehicle tire (12) to operatively generate tire-specific historical temperature data;
mounting a pressure sensor to the vehicle tire (12) to operatively generate historical tire-specific inflation pressure data; and
uploading through the mobile network (32) the historical temperature data and the historical pressure data with the tire additional travel distance estimations and the tire-specific identification data to the remote server.

10. The method of claim 8 or 9, wherein the vehicle-based incremental vehicle travel distance estimator comprises at least one vehicle-mounted sensor providing by a vehicle CAN-bus (22) an incremental vehicle travel distance estimation.

## Patentansprüche

1. Reifenverfolgungssystem zum Verfolgen einer durch einen Fahrzeugreifen (12) durchgemachten Laufleistung, wobei das System Folgendes umfasst:
ein Fahrzeug (10), das durch wenigstens einen Fahrzeugreifen (12) getragen wird;
einen an dem Reifen befestigten Identifikationstransponder, der betriebsfähig ist, um zeitgestempelte reifenspezifische Identifikationsdaten zu erzeugen;
ein fahrzeugbasiertes System, das betriebsfähig ist, um einen synchronen Strom von Schätzungen einer inkrementellen Fahrzeugfahrstrecke zu erzeugen;
einen Schätzer für Zeitstempelsynchronisation und gefahrene Strecke (24), der betriebsfähig ist, um einen synchronen, vorzugsweise fortlaufenden Strom von Reifenzusatzfahrstreckenschätzungen basierend auf dem Strom von Schätzungen der inkrementellen Fahrzeugfahrstrecke und den zeitgestempelten reifenspezifischen Identifikationsdaten zu schätzen;
ein Mobilnetz (32) zum Hochladen der Reifenzusatzfahrstreckenschätzungen und der reifenspezifischen Identifikationsdaten auf einem entfernten Server;
wobei der entfernte Server eine Gesamtreifenfahrstrecke aus den hochgeladenen Reifenzusatzfahrstreckenschätzungen in einer Form wirkaggregiert, auf die durch die reifenspezifischen Identifikationsdaten zugegriffen werden kann.

2. Reifenverfolgungssystem nach Anspruch 1, wobei das fahrzeugbasierte System, das betriebsfähig ist, um die inkrementelle Fahrzeugfahrstrecke zu messen, wenigstens einen fahrzeugmontierten Sensor umfasst, der durch einen Fahrzeug-CAN-Bus (22) eine Schätzung der inkrementellen Fahrzeugfahrstrecke bereitstellt.

3. Reifenverfolgungssystem nach Anspruch 1 oder 2, wobei das fahrzeugbasierte System, das betriebsfähig ist, um die inkrementelle Fahrzeugfahrstrecke zu messen, ein globales Positionsbestimmungssystem (36) umfasst, das eine Schätzung der inkrementellen Fahrzeugfahrstrecke bereitstellt.

4. Reifenverfolgungssystem nach Anspruch 1, 2 oder 3, das ferner einen reifenmontierten Drucksensor (14) umfasst, der historische reifenspezifische Luftdruckdaten wirkerzeugt, und wobei das Mobilnetz (32) betriebsfähig ist, um die historischen reifenspezifischen Luftdruckdaten auf dem entfernten Server mit der Reifenzusatzfahrstreckenschätzung und den reifenspezifischen Identifikationsdaten hochzuladen.

5. Reifenverfolgungssystem nach wenigstens einem der vorhergehenden Ansprüche, das ferner einen auf dem Reifen montierten Temperatursensor umfasst, der reifenspezifische historische Temperaturdaten wirkerzeugt, und wobei das Mobilnetz (32) betriebsfähig ist, um die historischen reifenspezifischen Temperaturdaten auf dem entfernten Server mit der Reifenzusatzfahrstreckenschätzung und den reifenspezifischen Identifikationsdaten hochzuladen.

6. Reifenverfolgungssystem nach wenigstens einem der vorhergehenden Ansprüche, wobei das fahrzeugbasierte System ein fahrzeugbasierter Schätzer der inkrementellen Fahrzeugfahrstrecke ist.

7. Reifenverfolgungssystem nach wenigstens einem der vorhergehenden Ansprüche, umfassend einen reifenmontierten Temperatursensor, der reifenspezifische historische Temperaturdaten wirkerzeugt; und einen reifenmontierten Drucksensor umfasst, der historische reifenspezifische Luftdruckdaten wirkerzeugt; und wobei das Mobilnetz die historischen Temperaturdaten und die historischen Druckdaten mit den Schätzungen der inkrementellen Fahrzeugfahrstrecke auf dem entfernten Server hochlädt.

8. Verfahren zum Verfolgen historischer Reifeninformationen, wobei das Verfahren Folgendes umfasst:
Befestigen eines Identifikationstransponders an einem Fahrzeugreifen (12), der betriebsfähig ist, um zeitgestempelte, reifenspezifische Identifikationsdaten zu erzeugen;
Erzeugen, aus einem fahrzeugbasierten Schätzer der inkrementellen Fahrzeugfahrstrecke, eines synchronen Stroms von Schätzungen der inkrementellen Fahrzeugfahrstrecke;
Erzeugen, aus einem Schätzer für Zeitstempelsynchronisation und gefahrene Strecke (24), einen fortlaufenden synchronen Strom von Reifenzusatzfahrstreckenschätzungen basierend auf den Schätzungen der inkrementellen Fahrzeugfahrstrecke und den zeitgestempelten reifenspezifischen Identifikationsdaten;
Hochladen, durch ein Mobilnetz (32), der Reifenzusatzfahrstreckenschätzungen und der reifenspezifischen Identifikationsdaten auf einem entfernten Server;
Erzeugen, aus dem entfernten Server, eines Aggregats der Reifenzusatzfahrstreckenschätzungen in einer Form, auf die durch die reifenspezifischen Identifikationsdaten zugegriffen werden kann.

9. Verfahren nach Anspruch 8, das ferner Folgendes umfasst:
Montieren eines Temperatursensors an dem Fahrzeugreifen (12), um reifenspezifische historische Temperaturdaten wirkzuerzeugen;
Montieren eines Drucksensors an dem Fahrzeugreifen (12), um historische reifenspezifische Luftdruckdaten wirkzuerzeugen; und
Hochladen, durch das Mobilnetz (32), der historischen Temperaturdaten und der historischen Druckdaten mit den Reifenzusatzfahrstreckenschätzungen und den reifenspezifischen Identifikationsdaten auf dem entfernten Server.

10. Verfahren nach Anspruch 8 oder 9, wobei der fahrzeugbasierte Schätzer der inkrementellen Fahrzeugfahrstrecke wenigstens einen fahrzeugmontierten Sensor umfasst, der durch einen Fahrzeug-CAN-Bus (22) eine Schätzung der inkrementellen Fahrzeugfahrstrecke bereitstellt.

## Revendications

1. Système de repérage destiné à un bandage pneumatique qui vise le repérage d'un millage de voyage qui a été effectué par le bandage pneumatique (12) d'un véhicule, le système comprenant :
un véhicule (10) qui est supporté par au moins un bandage pneumatique (12) d'un véhicule ;
un transpondeur d'identification fixé au bandage pneumatique, qui peut être activé pour générer des données d'identification horodatées, qui sont spécifiques au bandage pneumatique ;
un système basé sur le véhicule qui peut être activé pour générer un flux synchrone d'estimations des distances de parcours incrémentielles liées au véhicule ;
un dispositif (24) d'estimation de synchronisation d'horodatage et des distances parcourues, qui peut être activé pour estimer un flux synchrone, de préférence continu, d'estimations des distances de parcours supplémentaires concernant le bandage pneumatique qui se base sur le flux des estimations des distances de parcours incrémentielles liées au véhicule et sur les données d'identification horodatées, qui sont spécifiques au bandage pneumatique ;
- un réseau mobile (32) qui est destiné au téléchargement des estimations des distances de parcours incrémentielles liées au véhicule et des données d'identification qui sont spécifiques au bandage pneumatique, à destination d'un serveur à distance ;
dans lequel le serveur à distance regroupe de manière opérationnelle une distance de parcours totale concernant le bandage pneumatique à partir des estimations qui ont été téléchargées, en ce qui concerne les distances de parcours supplémentaires liées au bandage pneumatique, sous une forme accessible par les données d'identification qui sont spécifiques au bandage pneumatique.

2. Système de repérage destiné à un bandage pneumatique selon la revendication 1, dans lequel le système qui se base sur un véhicule, qui peut être activé pour mesurer les distances de parcours incrémentielles liées au véhicule comprend au moins un capteur monté sur le véhicule qui fournit, par l'intermédiaire d'un bus CAN (22) propre au véhicule, une estimation des distances de parcours incrémentielles liées au véhicule.

3. Système de repérage destiné à un bandage pneumatique selon la revendication 1 ou 2, dans lequel le système qui se base sur un véhicule, qui peut être activé pour mesurer les distances de parcours incrémentielles liées au véhicule, comprend un système de positionnement mondial (36) qui procure une estimation des distances de parcours incrémentielles liées au véhicule.

4. Système de repérage destiné à un bandage pneumatique selon la revendication 1, 2 ou 3, qui comprend en outre un capteur de la pression (44) monté sur le bandage pneumatique, qui génère de manière opérationnelle un historique des données de pression de gonflage qui sont spécifiques au bandage pneumatique ; et dans lequel le réseau mobile (32) peut être activé pour télécharger un historique concernant les données de pression de gonflage qui sont spécifiques au bandage pneumatique à destination du serveur à distance de manière conjointe avec les estimations des distances de parcours supplémentaires concernant le bandage pneumatique et avec les données d'identifications qui sont spécifiques au bandage pneumatique.

5. Système de repérage destiné à un bandage pneumatique selon au moins une des revendications précédentes, qui comprend en outre un capteur de la température qui est monté sur le bandage pneumatique qui génère de manière opérationnelle un historique des données de température qui sont spécifiques au bandage pneumatique ; et dans lequel le réseau mobile (32) peut être activé pour télécharger un historique concernant les données de température qui sont spécifiques au bandage pneumatique à destination du serveur à distance de manière conjointe avec les estimations des distances de parcours supplémentaires concernant le bandage pneumatique et avec les données d'identifications qui sont spécifiques au bandage pneumatique.

6. Système de repérage destiné à un bandage pneumatique selon au moins une des revendications précédentes, dans lequel le système basé sur un véhicule représente un dispositif d'estimation des distances de parcours incrémentielles liées au véhicule qui se base sur le véhicule.

7. Système de repérage destiné à un bandage pneumatique selon au moins une des revendications précédentes, qui comprend un capteur de la température qui est monté sur le bandage pneumatique qui génère de manière opérationnelle un historique concernant les données de température qui sont spécifiques au bandage pneumatique ; et un capteur de la pression qui est monté sur le bandage pneumatique qui génère de manière opérationnelle un historique concernant les données de pression de gonflage qui sont spécifiques au bandage pneumatique ; et dans lequel le réseau mobile procède au téléchargement de l'historique concernant les données de température et l'historique concernant les données de pression, de manière conjointe avec les estimations des distances de parcours incrémentielles liées au bandage pneumatique à destination du serveur à distance.

8. Procédé destiné au repérage d'un historique d'informations concernant un bandage pneumatique, le procédé comprenant le fait de :
fixer un transpondeur d'identification à un bandage pneumatique de véhicule (12) qui peut être activé pour générer des données d'identification horodatées qui sont spécifiques au bandage pneumatique;
générer, à partir d'un dispositif d'estimation des distances de parcours incrémentielles liées au véhicule en se basant sur le véhicule, un flux synchrone d'estimations des distances de parcours incrémentielles liées au véhicule ;
générer, à partir d'un dispositif d'estimation de synchronisation d'horodatage et des distances parcourues (24), un flux synchrone continu d'estimations des distances de parcours supplémentaires concernant le bandage pneumatique en se basant sur le flux des estimations des distances de parcours incrémentielles liées au véhicule et sur les données d'identification horodatées qui sont spécifiques au bandage pneumatique ;
télécharger, par l'intermédiaire d'un réseau mobile (32), les estimations des distances de parcours supplémentaires concernant le bandage pneumatique et les données d'identifications qui sont spécifiques au bandage pneumatique, à destination d'un serveur à distance ;
générer, à partir du serveur à distance, un agrégat des estimations des distances de parcours supplémentaires concernant le bandage pneumatique sous une forme accessible par les données d'identifications qui sont spécifiques au bandage pneumatique.

9. Procédé selon la revendication 8, qui comprend en outre le fait de:
monter un capteur de la température sur le bandage pneumatique (12) du véhicule dans le but de générer d'une manière opérationnelle un historique concernant les données de température qui sont spécifiques au bandage pneumatique ;
monter un capteur de la pression de gonflage sur le bandage pneumatique (12) du véhicule dans le but de générer d'une manière opérationnelle un historique concernant les données de pression de gonflage qui sont spécifiques au bandage pneumatique ; et
télécharger, par l'intermédiaire d'un réseau mobile (32), l'historique concernant les données de température et l'historique concernant les données de pression de gonflage, de manière conjointe avec les estimations des distances de parcours supplémentaires concernant le bandage pneumatique et les données d'identifications qui sont spécifiques au bandage pneumatique, à destination du serveur à distance.

10. Procédé selon la revendication 8 ou 9, dans lequel le dispositif d'estimation des distances de parcours comprend au moins un capteur qui est monté sur le véhicule qui fournit, par l'intermédiaire d'un bus CAN (22) propre au véhicule, une estimation des distances de parcours incrémentielles liées au véhicule.
